# EUROPEAN PATENT APPLICATION

(11) **EP 2 839 762 A1**
(43) Date of publication of application: **25.02.2015**
(21) Application number: 14181835.1
(22) Date of filing: 21.08.2014
(51) Int. Cl.: A47C 7/38, A61G 5/12

(54) **Headrest assembly and chair assembly including the same**

(30) Priority: 22.08.2013 TW 102130041
(71) Applicant: Karma Medical Products Co., Ltd., Chiayi County 621 (TW); National Yunlin University Of Science and Technology, Taiwan 64002 (TW)
(72) Inventor: Cai, Deng-Chuan, 640 Yunlin County (TW); Chen, Shao-Yong, 640 Yunlin County (TW); Zhang, Yan-Wei, 640 Yunlin County (TW); Lai, Yen-Ju, 640 Yunlin County (TW); Shao, Ting, 640 Yunlin County (TW)
(74) Representative: Zinkler, Franz

(57) **Abstract**

A headrest assembly for a chair (9) includes a headrest unit (3), two spaced-apart grip frame members (23) respectively connected to two opposite ends of the headrest unit (3), and two spaced-apart connection frame members (21) respectively connected to the grip frame members (23). The grip frame members (23) gradually extend away from each other from the headrest unit (3) to the connection framemembers (21), respectively. Each of the grip frame members (23) extends obliquely, rearwardly and downwardly from the headrest unit (3) in a manner of being oblique to a first vertical plane (81) that has opposite front and rear surfaces respectively facing front and rear sides of the chair (9).

## Description

The invention relates to a headrest assembly, and more particularly to a headrest assembly for a chair assembly, and to a chair assembly including the headrest assembly.

A conventional chair assembly, such as an office chair seat, a vehicle seat, a theater seat, a wheelchair seat, an assistive mobility device or an electric scooter, generally includes a seat and a backrest. The seat is adapted to support a user's buttocks and the backrest is adapted to support the user's waist and back.

However, some conventional seat assemblies have no headrest design. After sitting on such conventional seat assembly for a long time period, poor posture may occur to impose an unnecessary burden on the user' s neck, thus causing health issues. Hence, there is a need in the art to provide a headrest assembly that is feasible to be combined with such conventional seat assembly.

Therefore, an object of the present invention is to provide a headrest assembly for a chair.

According to one aspect of the present invention, a headrest assembly for connecting a backrest of a chair comprises a headrest unit, two spaced-apart grip frame members and two spaced-apart connection frame members.

The grip frame members are respectively connected to two opposite ends of the headrest unit.

The connection frame members are respectively connected to the grip frame members for connection with the backrest.

The grip frame members gradually extend away from each other from the headrest unit to the connection frame members, respectively. Each of the grip frame members extends obliquely, rearwardly and downwardly from the headrest unit in a manner of being oblique to a first vertical plane that has opposite front and rear surfaces respectively facing front and rear sides of the chair.

According to another aspect of the present invention, a chair includes a backrest having two backrest frame members connected to the abovementioned headrest assembly.

Other features and advantages of the present invention will become apparent in the following detailed description of the embodiments with reference to the accompanying drawings, of which:
Figure 1 is a fragmentary perspective view of the first embodiment of a chair according to the present invention, illustrating a headrest assembly connected to two spaced-apart backrest frame members of a backrest;
Figure 2 is a fragmentary side view of the first embodiment illustrating the headrest assembly;
Figure 3 is a fragmentary rear view of the first embodiment illustrating the headrest assembly;
Figure 4 is a fragmentary exploded perspective view of the second embodiment of a chair according to the present invention, illustrating a headrest assembly connected to a backrest by an insertion connection;
Figure 5 is a fragmentary exploded perspective view of the third embodiment of a chair according to the present invention, illustrating a headrest assembly connected to a backrest by a sleeve connection;
Figure 6 is a fragmentary exploded perspective view of the fourth embodiment of a chair according to the present invention, illustrating a headrest assembly and a backrest connected to each other by a fastener;
Figure 7 is a fragmentary exploded perspective view of the fifth embodiment of a chair according to the present invention, illustrating a headrest assembly and a backrest connected to each other by a tightening ring and a fastener;
Figure 8 is a fragmentary exploded perspective view of the sixth embodiment of a chair according to the present invention, illustrating a headrest assembly and a backrest;
Figure 9 is a fragmentary perspective view of the seventh embodiment of a chair according to the present invention, illustrating an adjustable headrest unit of a headrest assembly;
Figure 10 is a fragmentary perspective view of the eighth embodiment of a chair according to the present invention, illustrating a headrest assembly;
Figure 11 is a fragmentary exploded perspective view of the eighth embodiment, illustrating a connection of a head cushion and cushion couplers of the headrest assembly;
Figure 12 is a fragmentarypartly-sectional side view of the eighth embodiment;
Figure 13 is an exploded perspective view of the ninth embodiment of a chair according to the present invention, illustrating partially disassembling of a headrest assembly;
Figure 14 is a fragmentary side view of the ninth embodiment, illustrating the headrest assembly having a headrest unit that is movable between upward and downward positions;
Figure 15 is a fragmentary rear view of the tenth embodiment of a chair according to the present invention, illustrating a headrest unit of a headrest assembly;
Figure 16 is a fragmentary top view of the tenth embodiment, illustrating the headrest unit;
Figure 17 is a perspective view of the eleventh embodiment of a chair according to the present invention, illustrating a headrest assembly; and
Figure 18 is a fragmentary front view of the eleventh embodiment, illustrating an adjustable headrest unit of the headrest assembly.

Before the present invention is described in greater detail, it should be noted that the same reference numerals are used to denote like elements throughout the specification.

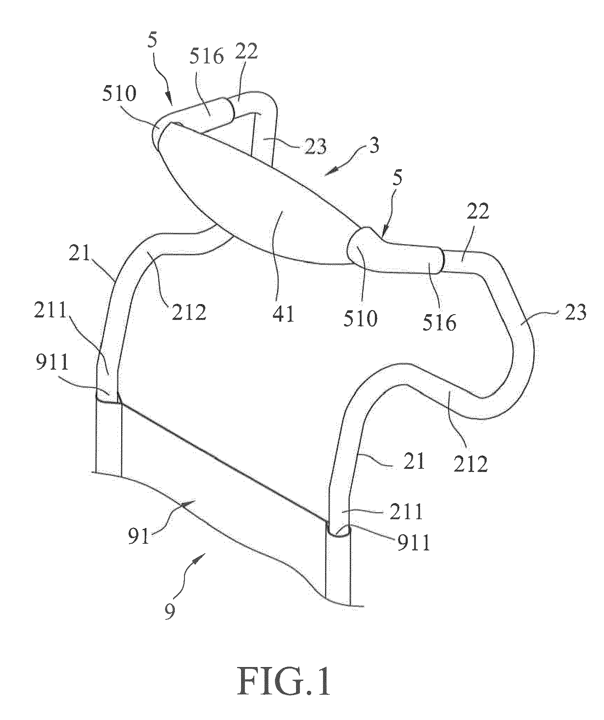

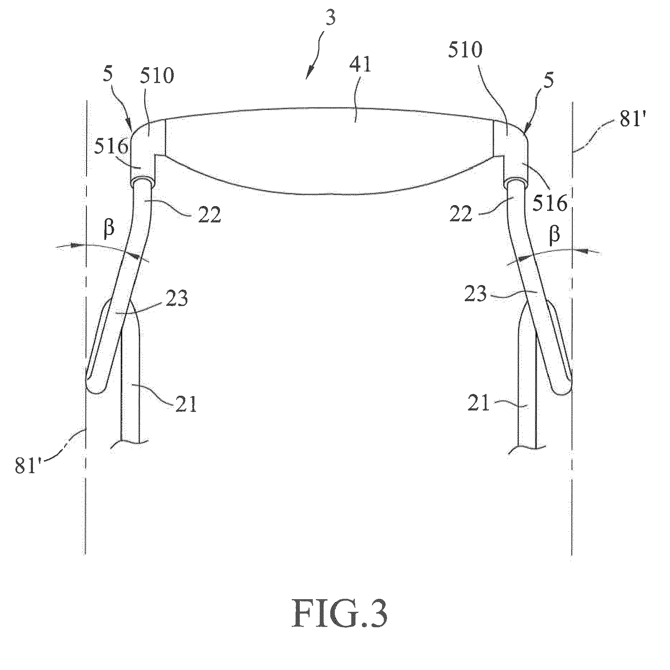

Referring to Figures 1 to 3, the first embodiment of a chair 9 according to the present invention is illustrated. The chair 9 includes a head rest assembly, a seat (not shown) on which a user can sit and a backrest 91 which allows the user to lean thereon. The backrest 91 has two backrest frame members 911 that are connected to the seat and that are spaced apart from each other. The chair 9 may be one of an office chair, a vehicle seat, a theater seat, a wheelchair seat, an assistive mobility device, an electric scooter, etc. Since the feature of this invention does not reside in the seat, which may be readily appreciated by those skilled in the art, details of the same are omitted herein for the sake of brevity.

The headrest assembly is connected to the backrest 91. In this embodiment, the headrest assembly includes a headrest unit 3, two spaced-apart grip frame members 23 respectively connected to two opposite ends of the headrest unit 3, and two spaced-apart connection frame members 21 respectively connecting the grip frame members 23 to the backrest frame members 911 of the backrest 91. In addition, the headrest assembly further includes two bridges 22, each of which bridges the headrest unit 3 and a corresponding one of the grip frame members 23. As a non-limiting arrangement, each of the bridges 22 and the corresponding grip frame member 23 and connection frame member 21 are integrally formed in one-piece.

In the first embodiment, each of the connection frame members 21 has a distal section 211 distal from the respective grip frame member 23, and a proximal section 212 proximate to the respective grip frame member 23. As a non-limiting arrangement, the distal section 211 of each of the connection frame members 21 is formed as one piece with a respective one of the backrest frame members 911. In other embodiments, the distal section 211 of each of the connection frame members 21 and the respective one of the backrest frame members 911 may be fixedly or removably connected to each other in other manners, such as a welding connection, an insertion connection, a sleeved connection or a threaded connection.

In this embodiment, the grip frame members 23 gradually extend away from each other from the headrest unit 3 to the respective connection frame members 21. Each of the grip frame members 23 extends outwardly, rearwardly and downwardly in an oblique fashion from the headrest unit 3 so as to be oblique relative to a first vertical plane 81 and a second vertical plane 81' that is perpendicular to the first vertical plane 81. The first vertical plane 81 has opposite front and rear surface respectively facing front and rear sides of the chair 9. Specifically, each of the grip frame members 23 forms a first angle α that is greater than 0 degrees but smaller than 30 degrees relative to the first vertical plane 81, and a second angle β that is greater than 0 degrees but smaller than 30 degrees relative to the second vertical plane 81'. Accordingly, for example, when the chair 9 is movable and the user sitting on the chair 9 needs a helper to push the chair 9 to start moving, or the user intends to push the chair 9 to move together therewith instead of sitting thereon, the helper or the user may grasp the grip frame members 23 with ease due to conformation of the inclination of the grip frame members 23 with the natual extension direction of the fist eyes of the helper or user' s hands. As a non-limiting arrangement, the first angle α ranges from 10 degrees to 20 degrees relative to the first vertical plane 81, and the second angle β ranges from 10 degrees to 20 degrees relative to the second vertical plane 81'. As another non-limiting arrangement, the first angle α ranges from 12 degrees to 15 degrees relative to the first vertical plane 81, and the second angle β ranges from 12 degrees to 15 degrees relative to the second vertical plane 81' .

In the first embodiment, the headrest unit 3 includes a head cushion 41 and two cushion couplers 5. Each of the cushion couplers 5 is connected to the head cushion 41 and a corresponding one of the bridges 22. Specifically, each of the cushion couplers 5 has a first end 510 fixed to the head cushion 41 and a second end 516 distal from the first end 510 and connected to the corresponding one of the bridges 22. Besides, the proximal section 212 of each of the connection frame members 21 extends rearwardly from the distal section 211 to the corresponding one of the grip frame members 23 in such a manner that the distal sections 211 of the connection frame members 21 and the first ends 510 of the cushion couplers 5 lie substantially in a same plane that is inclined with respect to the first vertical plane 81.

In actual use, the head cushion 41 supports the head of the user sitting on the seat so as to relief the stress on the user's neck. As a result, the head cushion 41 not only provides comfort, but also reduces health issues caused by improper posture of the user's neck. In the case the chair 9 is a wheelchair, compared with handle bars of a conventional wheelchair that extend in parallel to each other, subjecting the helper or user who grips the handle bars to injury or pain due to improper posture. Since each of the grip frame members 23 of the headrest assembly according to the first embodiment forms the first angle α and the second angle P relative to the first vertical plane 81 and the second vertical plane 81', respectively, the helper or user can naturally grip the grip frame members 23 in a comfortable posture when moving the chair 9 in a relatively ergonomic manner.

Besides, since the head cushion 41 supports the user' s head and since the distal sections 211 of the connection frame members 21 and the first ends 510 of the cushion couplers 5 lie substantially in the same plane inclined with respect to the first vertical plane 81, the user is allowed to sit on the chair 9 in a comfortable manner.

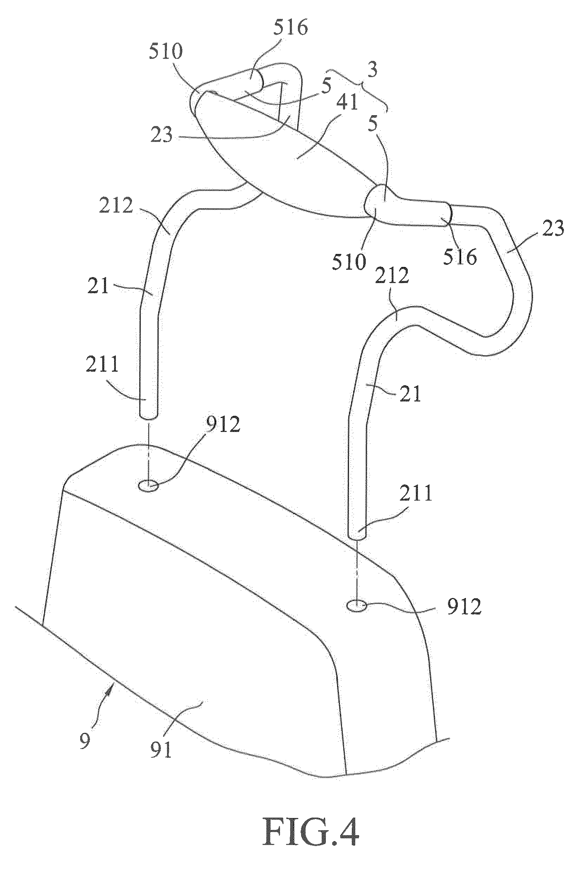

Figure 4 illustrates the second embodiment of a chair 9 according to the present invention, which has a structure generally similar to that of the first embodiment. However, in the second embodiment, the distal section 211 of each of the connection frame members 21 is removably assembled with the backrest frame 91 through insertion connection.

In the second embodiment, the chair 9 may be an office chair, a vehicle chair, a powered wheelchair or a theater chair. The backrest 91 has two insertion holes 912. The distal section 211 of each of the connection frame members 21 is removably inserted into a corresponding one of the insertion holes 912.

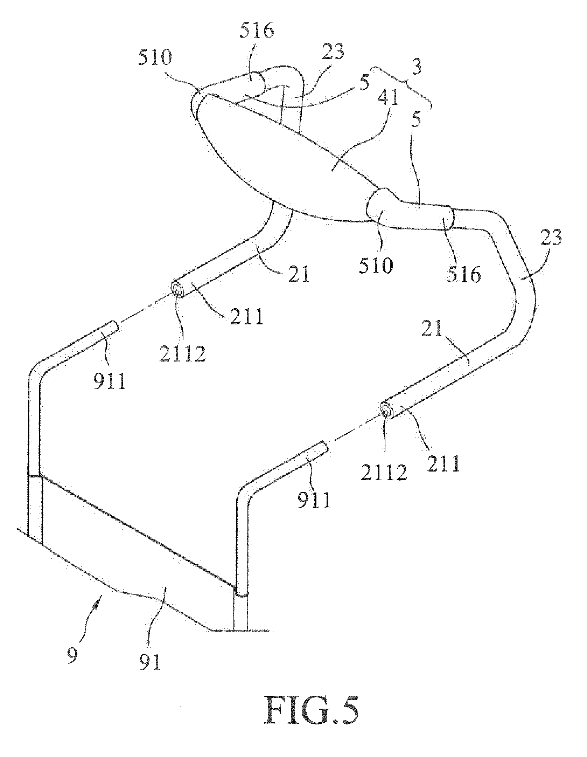

Figure 5 illustrates the third embodiment of a chair 9 according to the present invention, which has a structure generally similar to that of the first embodiment. However, in the third embodiment, the chair 9 is a wheelchair. Each of the connection frame members 21 is tubular in form and is sleeved detachably on the respective one of the backrest frame members 911.

In the third embodiment, the distal section 211 of each of the connection frame members 21 is provided with an insertion opening 2112, for removable insertion of the respective one of the backrest frame members 911. In other words, the distal section 211 of each of the connection frame members 21 is connected to and surrounds the respective one of the backrest frame members 911 in a detachable manner.

In the third embodiment, since the headrest assembly is removable from the backrest 91, the backrest frame members 911 can serve as wheelchair handle bars to allow the helper or user to move the chair assembly 9 when the headrest assembly is not required. As such, utilization of the chair 9 becomes relatively flexible and convenient to the user. When the distal sections 211 of the connection frame members 21 and the backrest frame members 911 are assembled together, the grip frame members 23 provide easy gripping and are advantageous in reducing the burdens on the user's hands when the user moves the chair 9.

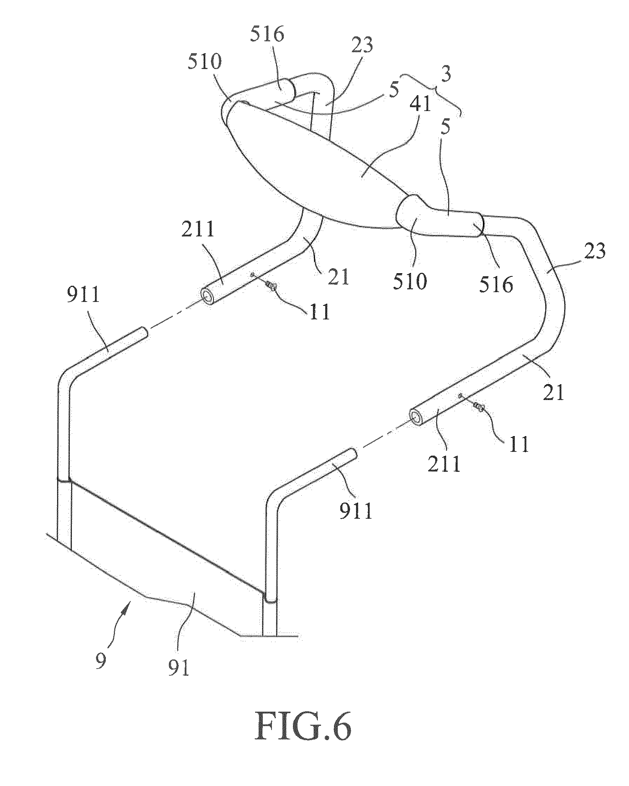

Figure 6 illustrates the fourth embodiment of a chair 9 according to the present invention, which has a structure generally similar to that of the third embodiment. However, in the fourth embodiment, each of the connection frame members 21 further has a fastener 11 which is exemplified by a screw. The fasteners 11 of the connection frame members 21 respectively and threadedly secure the distal sections 211 of the connection frame members 21 to the backrest frame members 911 so as to enhance a firm connection between the headrest assembly and the backrest 91.

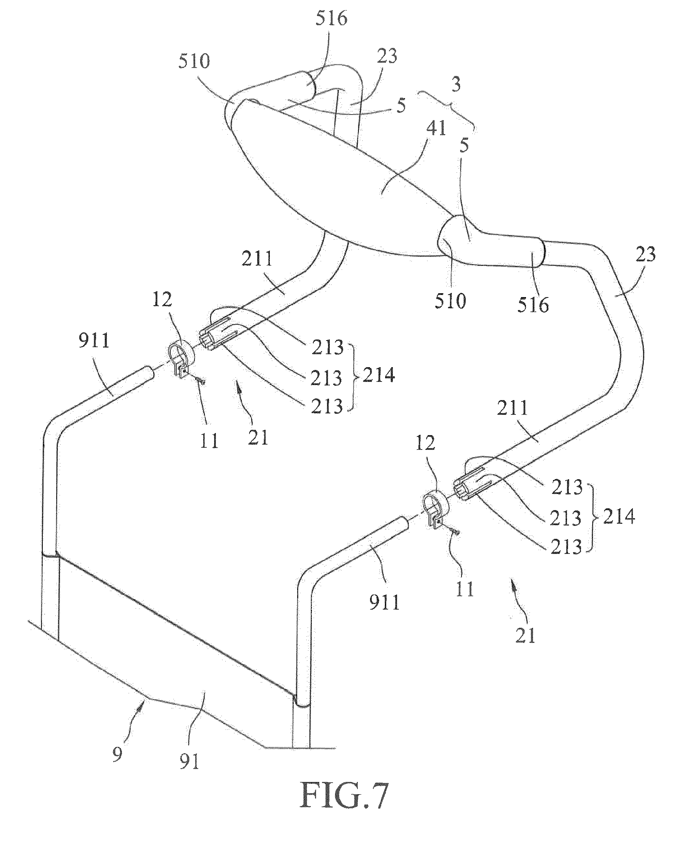

Figure 7 illustrates the fifth embodiment of a chair 9 according to the present invention, which has a structure generally similar to that of the third embodiment. However, in the fifth embodiment, each of the connection frame members 21 further has a tubular connector 214, a tightening ring 12 and a fastener 11. In this embodiment, the tubular connector 214 extends from the distal section 211 to the respective one of the backrest frame members 911. Specifically, the tubular connector 214 has a plurality of annularly spaced-apart clamping prongs 213 surrounding the respective one of the backrest frame members 911. The tightening ring 12 is sleeved on the clamping prongs 213. The fastener 11 is removably connected to two opposite ends of the tightening ring 12 to tighten the tightening ring 12 and the clamping prongs 213 against the respective one of the backrest frame members 911.

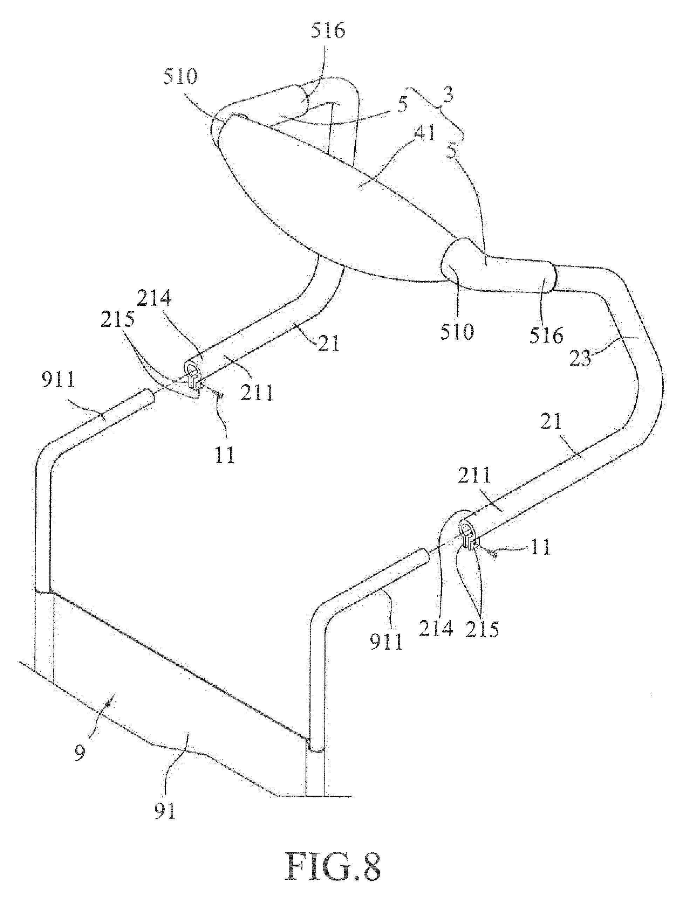

Figure 8 illustrates the sixth embodiment of a chair 9 according to the present invention, which has a structure generally similar to that of the third embodiment. However, in the sixth embodiment, each of the connection frame members 21 further has a fastener 11. The distal section 211 of each of the connection frame members 21 is formed with a notched clamping ring 214 and two plates 215 extending from two opposite ends of the notched clamping ring 214. The clamping ring 214 has a C-shaped cross section, and is sleeved on the respective one of the backrest frame members 911. The fastener 11 is threadedly extended through the plates 215 to tighten the clamping ring 214 against the respective one of the backrest frame members 911.

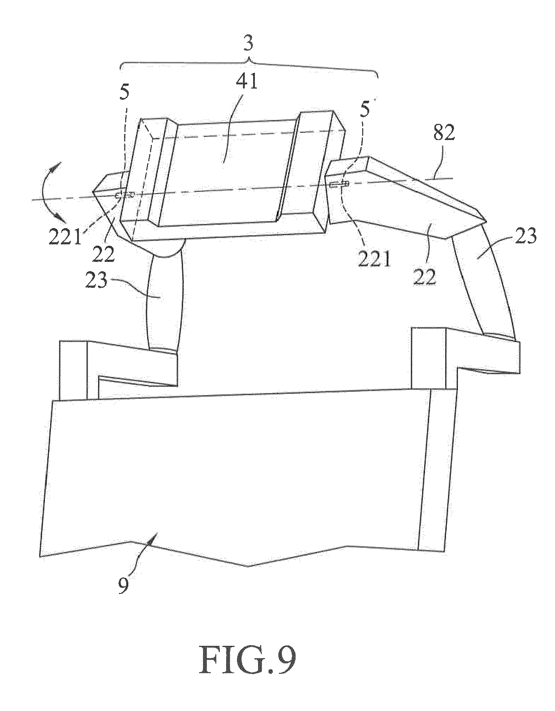

Figure 9 illustrates the seventh embodiment of a chair 9 according to the present invention, which has a structure generally similar to that of the first embodiment. However, in the seventh embodiment, the cushion couplers 5 are mounted rotatably to the respective one of the bridges 22 to permit adjustment of the head cushion 41. Specifically, the bridges 22 respectively have blind holes 221 substantially aligned with each other along a horizontal line 82. The cushion couplers 5 are respectively received in the blind holes 221 and are rotatable about the horizontal line 82, such that the head cushion 41 is rotatably adjustable about the horizontal line 82. Of course, in some embodiments, the cushion couplers 5 may be respectively provided with the blind holes 221 each receiving rotatably the corresponding one of the bridges 22 so that the cushion couplers 5 are rotatable about the horizontal line 82.

In the seventh embodiment, since the head cushion 41 is rotatably adjustable about the horizontal line 82, the headrest assembly is advantageous in supporting the user's head in a comfortable position at will.

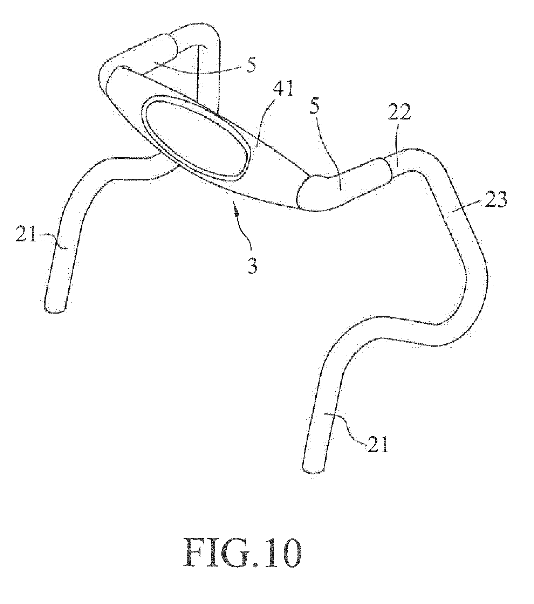

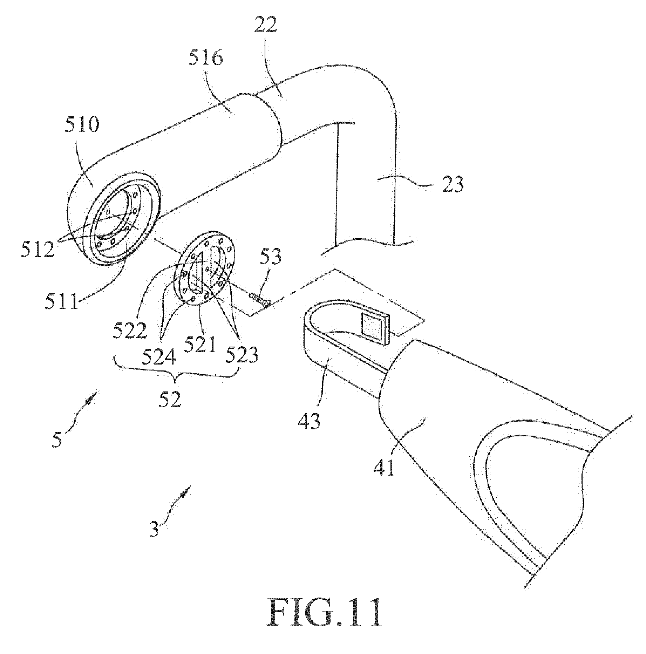

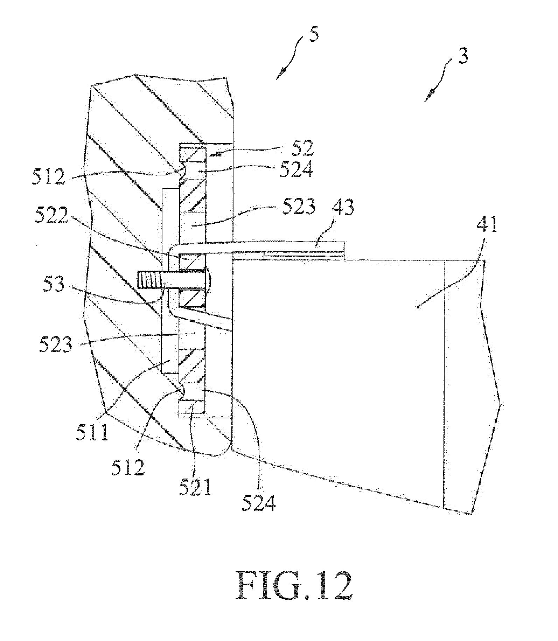

Figures 10 to 12 illustrate the eighth embodiment of a chair 9 (see Fig. 9) according to the present invention, which has a structure generally similar to that of the seventh embodiment. However, in the eighth embodiment, the cushion couplers 5 are connected to the head cushion 41 in a manner different from the seventh embodiment. Since the cushion couplers 5 have the same structure, only one of the cushion couplers 5 is shown is Figures 11 and 12 for the sake of brevity.

The first end 510 of each cushion coupler 5 has a receiving hole 511 and a plurality of annularly spaced-apart detents 512 disposed in the receiving hole 511. In this embodiment, each cushion coupler 5 further includes a rotating adjuster 52 that is rotatably received in the receiving hole 511, and a threaded rod 53 that secures the rotating adjuster 52 in the receiving hole 511. The rotating adjuster 52 is rotatable about the threaded rod 53 in the receiving hole 511.

In this embodiment, the rotating adjuster 52 has an annular disc 521, a cross-bar 522 that extends across the annular disc 521 and that cooperates with the annular disc 521 to form two through holes 523, and a plurality of annularly spaced-apart retaining apertures 524 extending through the annular disc 521. The threaded rod 53 extends through the cross-bar 522. The detents 512 respectively and releasably extend into the retaining apertures 524 so as to limit rotation of the rotating adjuster 52.

In the eighth embodiment, the headrest unit 3 further includes two secure members 43 (only one is shown Figures 11 and 12) that are respectively disposed on two opposite sides of the head cushion 41. Each secure member 43 is fixed at one end to the head cushion 41. The other end of each secure member 43 is engaged with the cross-bar 522 through sequentially extending through the through holes 523 of the rotating adjuster 52 of a corresponding one of the cushion couplers 5 and is detachably secured to the head cushion 41. Hence, in this embodiment, the secure members 43 are connected to the head cushion 41 in a hook-and-loop manner. Besides, the detachable engagement between the secure members 43 and the head cushion 41 may be performed in a clip or adhesive connection manner.

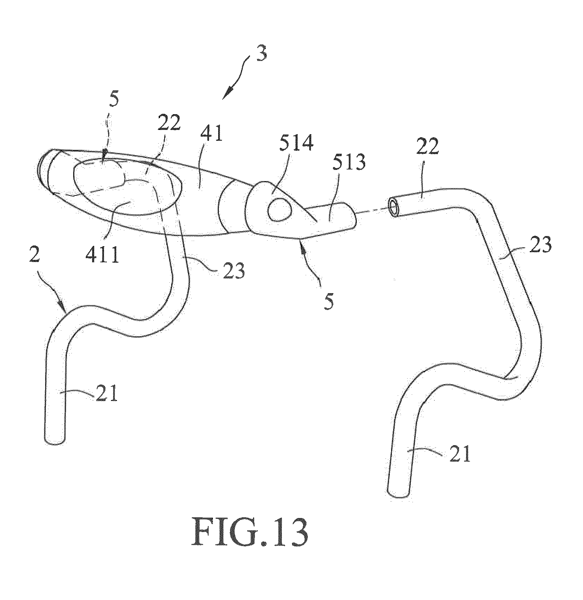

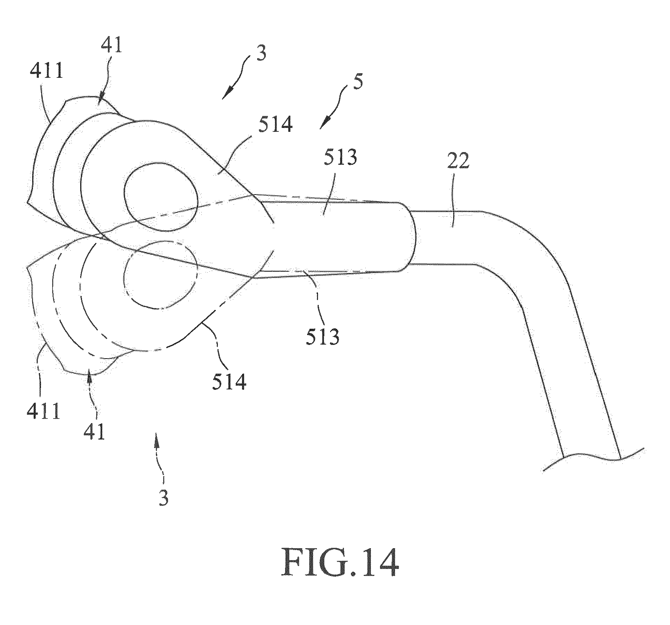

Figures 13 and 14 illustrate the ninth embodiment of a chair 9 according to the present invention, which has a structure generally similar to that of the first embodiment. However, in the ninth embodiment, the headrest unit 3 is adjustable in an upward position and a downward position relative to the backrest 91 (see Fig. 1).

In the ninth embodiment, the cushion couplers 5 are mounted removably to the respective bridges 22 and are to permit adjustment of the head cushion 41 between the upward and downward positions. In this embodiment, each of the cushion couplers 5 has a sleeve portion 513 that is detachably sleeved on the corresponding one of the bridges 22 and a joint portion 514 that extends angularly from the sleeve portion 513 and that is connected to the head cushion 41. In addition, the head cushion 41 has an indentation surface 411 that is indented inwardly and that is adapted to support the user's head.

For each cushion coupler 5 (only one is shown in Fig. 14), when the assembly of the cushion couplers 5 and the head cushion 41 is disposed such that the joint portions 514 of the cushion couplers 5 extend upwardly relative to the sleeve portions 513 when the sleeve portions 513 are respectively sleeved on the bridges 22, the head cushion 41 is disposed upwardly relative to sleeve portions 513 and the indentation surface 411 faces upward. As such, the headrest unit 3 is disposed in the upward position. By flipping the assembly of the cushion couplers 5 and the head cushion 41 upside-down such that the joint portions 514 extend downwardly relative to the sleeve portions 513 and the sleeve portions 513 are respectively sleeved on the bridges 22, the head cushion 41 is disposed downwardly relative to the sleeve portions 513 and the indentation surface 411 faces downwardly. As such, the headrest unit 3 is disposed in the downward position.

By virtue of the sleeve portions 513 being detachably sleeved on the bridges 22, the headrest unit 3 is adjustable between the upward and downward positions. In such arrangement, the indentation surface 411 of the head cushion 41 is adjustable to face upwardly or downwardly in accordance with the user's requirement.

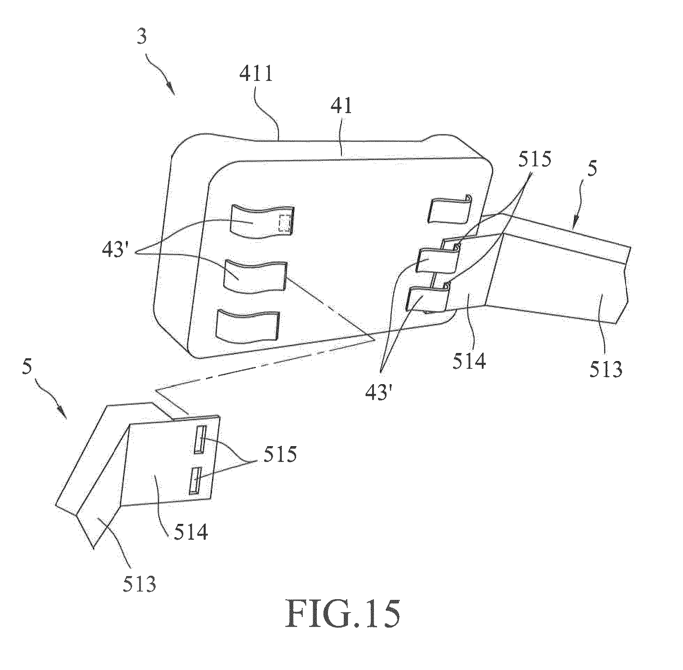

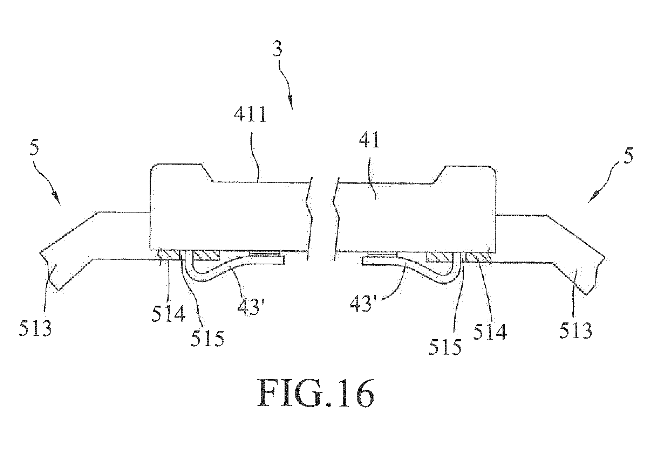

Figures 15 and 16 illustrate the tenth embodiment of a chair 9 (see Fig. 1) according to the present invention, which has a structure generally similar to that of the ninth embodiment.

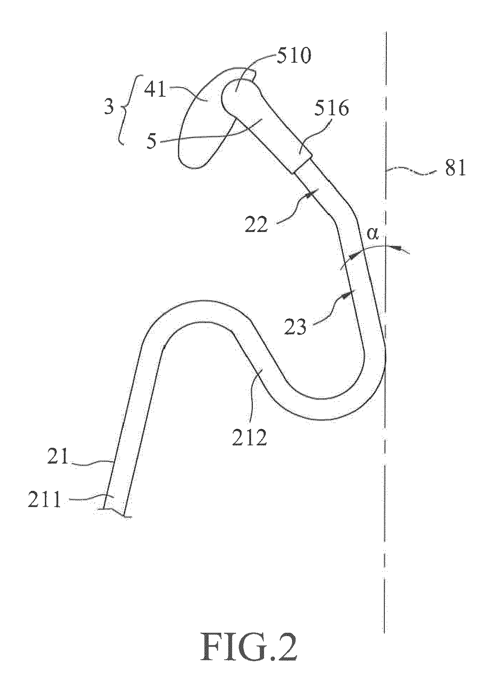

However, in the tenth embodiment, the joint portion 514 of each cushion coupler 5 has two spaced-apart connection holes 515 that are aligned with each other in a top-down direction. In addition, the headrest unit 3 further includes two spaced-apart secure member units. Each of the secure member units includes three secure members 43' that are separately aligned with each other in the top-down direction and that are disposed on the head cushion 41 to face the first vertical plane 81 (see Fig. 2) . In this embodiment, any two secure members 43' of each secure member unit are fixed at first ends to the head cushion 41 and respectively have second ends that are respectively opposite to the first ends, that extend through the connection holes 515 of the corresponding one of the cushion couplers 5 and that are detachably secured to the head cushion 41. In this embodiment, the second ends of the secure members 43' are connected to the head cushion 41 in a hook-and-loop manner. However, such is not limited to this disclosure. For example, any two secure members 43' can extend through the connection holes 515 to secure the head cushion 41 to the corresponding cushion coupler 5 in a clip or adhesive connection manner.

In actual use, since each cushion coupler 5 is detachably connected to the head cushion 41, the head cushion 41 can first be adjusted to a proper height relative to the backrest 91, and then be secured at the proper height by extending two opposite secure members 43' of each secure member unit through the connection holes 515 of the corresponding cushion coupler 5. As a result, the user can adjust the height of the headrest unit 3 relative to the backrest 91 as desired. It should be noted herein that the numbers of the connection holes 515 and the secure members 43' are not limited to this disclosure.

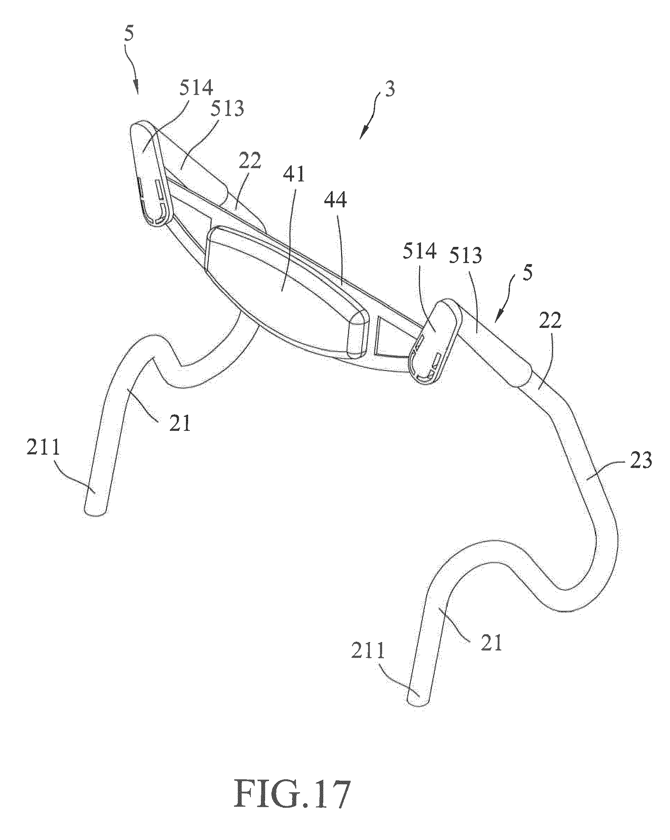

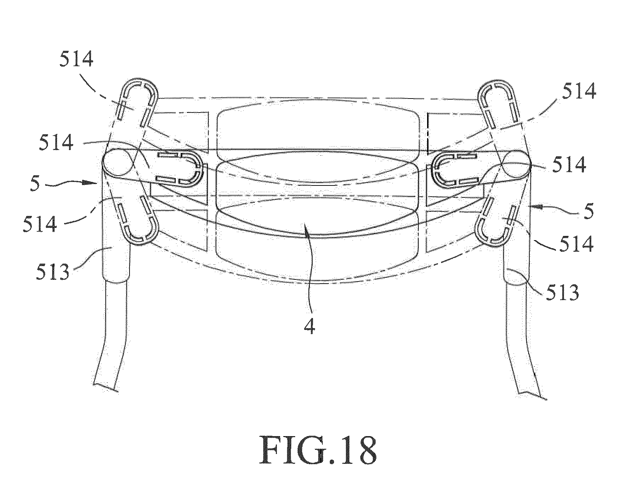

Figures 17 and 18 illustrate the eleventh embodiment of a chair 9 (see Fig. 1) according to the present invention, which has a structure generally similar to that of the ninth embodiment. However, in the eleventh embodiment, the headrest unit 3 further includes a mounting plate 44 on which the head cushion 41 is mounted. In this embodiment, for each of the cushion couplers 5, the sleeve portion 513 is detachably sleeved on the corresponding one of the bridges 22, and the joint portion 514 is pivotally connected between the sleeve portion 513 and a corresponding one of two opposite sides of the mounting plate 44.

In actual use, the head cushion 41 and the mounting plate 44 are adjustable together in the top-down manner (shown in Fig. 18) according to the user's requirement by virtue of the pivotable connection between the joint portion 514 of each cushion couplers 5 and each of the sleeve portion 513 and the corresponding side of the mounting plate 44. Since the feature of the chair 9 does not reside in the configurations of the mounting plate 44, and the joint portion 514 and sleeve portion 513 of each cushion coupler 5, which may be readily changed and adjusted by those skilled in the art, details of the same are omitted herein for the sake of brevity.

To sum up, by virtue of the headrest assembly that is feasible to be connected to the backrests 91 of various chairs, the headrest unit 3 not only can be adjustable in height relative to the backrest 91 according the user's requirement, but also may relax the burden of the user's neck to provide improved comfortableness. Moreover, since each grip frame members 23 of the headrest assembly forms the first angle α and the second angle β respectively relative to the first vertical plane 81 and the second vertical plane 81' , the helper or user can naturally grip the grip frame members 23 in a comfortable posture when the need arises.

## Claims

1. A headrest assembly for connecting a backrest (91) of a chair (9), the headrest assembly **characterized by**:
a headrest unit (3);
two spaced-apart grip frame members (23) respectively connected to two opposite ends of said headrest unit (3); and
two spaced-apart connection frame members (21) respectively connected to said grip frame members (23) for connection with the backrest (91);
wherein said grip frame members (23) gradually extend away from each other from said headrest unit (3) to said connection frame members (21), respectively, each of said grip frame members (23) extending obliquely, rearwardly and downwardly from said headrest unit (3) in a manner of being oblique relative to a first vertical plane (81) that has opposite front and rear surfaces respectively facing front and rear sides of the chair (9).

2. The headrest assembly as claimed in Claim 1, **characterized in that** each of said grip frame members (23) forms a first angle (α) that is greater than 0 degrees but smaller than 30 degrees relative to the first vertical plane (81), and a second angle (β) that is greater than 0 degrees but smaller than 30 degrees relative to a second vertical plane (81') perpendicular to the first vertical plane (81).

3. The headrest assembly as claimed in claim 1, further **characterized by** two bridges (22), each of which bridges said headrest unit (3) and a corresponding one of said grip frame members (23), said headrest unit (3) including a head cushion (41), and two cushion couplers (5), each of which is connected to said head cushion (41) and a corresponding one of said bridges (22).

4. The headrest assembly as claimed in claim 3, **characterized in that** each of said cushion couplers (5) has a first end (510) fixed to said head cushion (41) and a second end (516) distal from said first end (510) and connected to the corresponding one of said bridges (22).

5. The headrest assembly as claimed in claim 3, **characterized in that** said cushion couplers (5) are mounted adjustably and respectively to said bridges (22) and are rotatable to permit adjustment of said head cushion (41).

6. The headrest assembly as claimed in claim 3, **characterized in that** said cushion couplers (5) are mounted detachably and respectively to said bridges (22) and are movable upward and downward to permit adjustment of said head cushion (41).

7. The headrest assembly as claimed in Claim 4, **characterized in that** each of said connection frame members (21) has a distal section (211) distal from the corresponding one of said grip frame members (23), and a proximal section (212) proximate to the corresponding one of said grip frame members (23), said proximal section (212) extending rearwardly from said distal section (211) to the corresponding one of said grip frame members (23) in a manner that said distal sections (211) of said connection frame members (23) and said first ends (510) of said cushion couplers lie substantially in a same plane that is inclined with respect to said first vertical plane (81).

8. A chair (9) **characterized by**:
a backrest (91) having two backrest frame members (911);
a headrest unit (3);
two spaced-apart grip frame members (23) respectively connected to two opposite ends of said headrest unit (3); and
two spaced-apart connection frame members (21) respectively connecting said grip frame members (23) to said backrest frame members (911);
wherein said grip frame members (23) gradually extend away from each other from said headrest unit (3) to said connection frame members (21), respectively, each of said grip frame members (23) extending obliquely, rearwardly and downwardly from said headrest unit (3) in a manner of being oblique relative to a first vertical plane (81) that has opposite front and rear surfaces respectively facing front and rear sides of the chair assembly (9).

9. The chair (9) as claimed as Claim 8, **characterized in that** each of said connection frame members (21) is formed as one piece with the respective one of said backrest frame members (911).

10. The chair (9) as claimed as Claim 8, **characterized in that** each of said connection frame members (21) is tubular and is sleeved detachably on the respective one of said backrest frame members (911).

11. The chair (9) as claimed as Claim 10, **characterized in that** each of said connection frame members (21) has a tubular connector (214), a tightening ring (12) and a fastener (11), said tubular connector (214) having a plurality of annularly spaced-apart clamping prongs (213) that surround the respective one of said backrest frame members (911), said tightening ring (12) being sleeved on said clamping prongs (213), said fastener (11) being removably connected to two opposite ends of said tightening ring (12) to tighten said tightening ring (12) and said clamping prongs (213) against the respective one of said backrest frame members (911).

12. The chair (9) as claimed as Claim 9, **characterized in that** said backrest (91) has two insertion holes (912), said connection frame members (21) being inserted respectively into said insertion holes (912).

13. The chair (9) as claimed in Claim 9, which is a wheelchair.
